# EUROPEAN PATENT APPLICATION

(11) **EP 4 481 704 A1**
(43) Date of publication of application: **25.12.2024**
(21) Application number: 24180885.6
(22) Date of filing: 07.06.2024
(51) Int. Cl.: G08B 13/08, F24F 11/30

(54) **SYSTEM AND METHOD FOR MONITORING OPENING OR CLOSING OF DOORS OF AN AREA OF INTEREST**

(30) Priority: 19.06.2023 US 202363508963 P
(71) Applicant: Carrier Corporation, Palm Beach Gardens, FL 33418 (US)
(72) Inventor: HENDRICKS, Adam, Columbia City (US); BAKER, Benjamen, New Haven (US); SMYTH, Michael, Andrews (US)
(74) Representative: Dehns

(57) **Abstract**

A system (100) to detect movement of doors (104) associated with an area of interest (AOI) (102) is disclosed. The system (100) comprises a pressure sensor (106) positioned at a predefined position within the AOI (102), wherein the pressure sensor (106) is operable to monitor air pressure within the AOI (102), and a processing device (108) in communication with the pressure sensor (106). The processing device (108) comprises one or more processors (108-1) coupled to a memory (108-2) storing instructions executable by the processors (108), and configured to monitor, using the pressure sensor (106), the air pressure within the AOI (102) in real-time, detect and measure a change in the air pressure within the AOI (102) based on the monitored air pressure, and detect opening or closing of one or more doors (104) associated with the AOI (102) based on the measured change in the air pressure within the AOI (102).

## Description

### BACKGROUND

This invention relates to a system and method for monitoring the movement (opening or closing) of doors of an area of interest or environment including but not limited to rooms of a building, warehouse, ship, or airplane.

### SUMMARY

According to a first aspect of the invention there is provided a system to detect movement of doors associated with an area of interest (AOI). The system comprises a pressure sensor positioned at a predefined position within the AOI, wherein the pressure sensor is operable to monitor air pressure within the AOI and a processing device in communication with the pressure sensor. The processing device comprises one or more processors coupled to a memory storing instructions executable by the processors, and configured to monitor, using the pressure sensor, the air pressure within the AOI in real time, detect and measure a change in the air pressure within the AOI based on the monitored air pressure, and detect opening or closing of one or more doors associated with the AOI based on the measured change in the air pressure within the AOI.

Optionally, the processing device is a thermostat associated with the AOI, and wherein the pressure sensor is configured on the thermostat or walls associated with the AOI.

Optionally, the processing device is in communication with a thermostat associated with the AOI, and wherein the pressure sensor is configured on the thermostat or walls associated with the AOI.

Optionally, the one or more doors are movably coupled to a wall of the AOI and configured to move between a closed position and an open position where the corresponding door is within the AOI.

Optionally, the processing device is configured to detect movement of the corresponding door from the open position to the closed position when the air pressure within the AOI is detected or measured to be decreased, and detect movement of the corresponding door from the closed position to the open position when the air pressure within the AOI is detected or measured to be increased.

Optionally, the one or more doors are movably coupled to a wall of the AOI and configured to move between a closed position and an open position where the corresponding door is outside the AOI.

Optionally, the processing device is configured to detect movement of the corresponding door from the open position to the closed position when the air pressure within the AOI is detected or measured to be increased, and detect movement of the corresponding door from the closed position to the open position when the air pressure within the AOI is detected or measured to be decreased.

Optionally, the processing device is configured to detect movement of one or more occupants into and out of the AOI based on the detected movement of the one or more doors between the closed position and the open position, and correspondingly count a number of the one or more occupants present within the AOI in real-time.

Optionally, the processing device is configured with a machine learning unit that is configured to receive training data comprising values of air pressure within one or more known AOIs having predefined known areas when the corresponding doors are at a closed position and an open position, and a rate of change in the air pressure within the one or more known AOIs upon moving the corresponding doors between the closed position and the open position, and train the processing device, using the received training data, to measure the change in air pressure within one or more new AOIs upon moving the corresponding doors between the closed position and the open position.

Optionally, when the system is installed in a new AOI, the processing device is configured to request one or more users or occupants of the AOI to manually move the corresponding doors of the new AOI between the closed position and the open position at a predefined interval, collect data comprising values of air pressure within the new AOI when the corresponding doors are at the closed position and the open position, and a rate of change in the air pressure within the new AOI upon moving the corresponding doors between the closed position and the open position, and calibrate the processing device, using the collected data, to detect opening or closing of the one or more doors associated with the new AOI.

According to a second aspect of the invention there is provided a method for detecting movement of doors associated with an area of interest (AOI). The method comprises the steps of: monitoring, using a pressure sensor positioned at a predefined position within the AOI, air pressure within the AOI in real time; detecting and measuring, by a processing device in communication with the pressure sensor, a change in the air pressure within the AOI based on the monitored pressure; and detecting, by the processing device, opening or closing of one or more doors associated with the AOI based on the measured change in the air pressure within the AOI.

Optionally, the one or more doors are movably coupled to a wall of the AOI and configured to move between a closed position and an open position where the corresponding door is within the AOI.

Optionally, the method comprises the steps of: detecting, by the processing device, movement of the corresponding door from the open position to the closed position when the air pressure within the AOI is detected or measured to be decreased, and detecting, by the processing device, movement of the corresponding door from the closed position to the open position when the air pressure within the AOI is detected or measured to be increased.

Optionally, the one or more doors are movably coupled to a wall of the AOI and configured to move between a closed position and an open position where the corresponding door is outside the AOI.

Optionally, the method comprises the steps of: detecting, by the processing device, movement of the corresponding door from the open position to the closed position when the air pressure within the AOI is detected or measured to be increased, and detecting, by the processing device, movement of the corresponding door from the closed position to the open position when the air pressure within the AOI is detected or measured to be decreased.

Optionally, the method further comprises the steps of detecting, by the processing device, movement of one or more occupants into and out of the AOI based on the detected movement of the one or more doors between the closed position and the open position, and correspondingly counting a number of the one or more occupants present within the AOI in real-time.

Optionally, the method comprises the steps of: receiving, by a machine learning unit configured with the processing device, training data comprising values of air pressure within one or more known AOIs having predefined known areas when the corresponding doors are at a closed position and an open position, and a rate of change in the air pressure within the one or more known AOIs upon moving the corresponding doors between the closed position and the open position; and training, the processing device, using the received training data, to measure the change in air pressure within one or more new AOIs upon moving the corresponding doors between the closed position and the open position.

Optionally, when the pressure sensor and the processing device are installed in a new AOI, the method comprises the steps of: requesting, by the processing device, one or more users or occupants of the AOI to manually move the corresponding doors of the new AOI between the closed position and the open position at a predefined interval; collecting, by the processing device, data comprising values of air pressure within the new AOI when the corresponding doors are at the closed position and the open position, and a rate of change in the air pressure within the new AOI upon moving the corresponding doors between the closed position and the open position; and calibrating, the processing device, using the collected data, to detect opening or closing of the one or more doors associated with the new AOI.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention by way of example only and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A shows a system implemented in an area of interest (AOI) for monitoring the movement of doors associated with the AOI, where the doors move within the AOI in an open position.
FIG. 1B shows a system implemented in an area of interest (AOI) for monitoring the movement of doors associated with the AOI, where the doors move outside the AOI in an open position.
FIG. 1C shows a block diagram of the system of FIGs. 1A and 1B.
FIG. 2 shows a method for monitoring the movement of doors associated with an area of interest (AOI).
FIG. 3 shows a pressure vs time plot monitored by the system when implemented in AOI of FIG. 1A.
FIG. 4 shows a block diagram of a hardware system used for implementing the processing device of FIGs. 1A to 1C.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications and alternatives falling within the scope of the invention as set out in the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the disclosure, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

The environment or area of interest (AOI), such as rooms in buildings, warehouses, ships, airplanes, and similar spaces, may be equipped with an HVAC system to maintain a conditioned environment within the AOI. Efficient operation of the HVAC system relies on detecting occupancy within the AOI. By considering the presence of occupants, the HVAC system may adjust its operating level accordingly. For example, the HVAC system may reduce its output or even shut off when no occupants are present within the AOI for a certain period. Conversely, when the number of occupants increases, the HVAC system may increase its output. This approach helps to maintain a conditioned environment within the AOI while optimizing the efficiency of the HVAC system. Additionally, occupancy detection within the AOI, regardless of whether it is equipped with an HVAC system, may contribute to security by preventing threats, intrusions, or unauthorized access. When unauthorized individuals are detected within the AOI, alarm system or security personnel associated with the AOI may be alerted to prevent any security breaches.

Occupancy detection within the AOI may be achieved by monitoring the opening and closing of its door(s) to determine the presence, absence, and count of occupants. Existing solutions for occupancy detection often involve expensive and complex devices, such as smart door locks or wired door sensors attached to the AOI's doors. These smart door locks or wired door sensors may indicate when a person enters or exits the AOI through a door. However, deploying and maintaining such smart door locks and door sensors may be challenging and costly, especially when the AOI has multiple doors and each door may be equipped with different sets of locks or sensors.

This invention provides a simple, automated, efficient, and cost-effective system and method for monitoring the movement (opening or closing) of doors of an area of interest (AOI) for occupancy detection within the AOI.

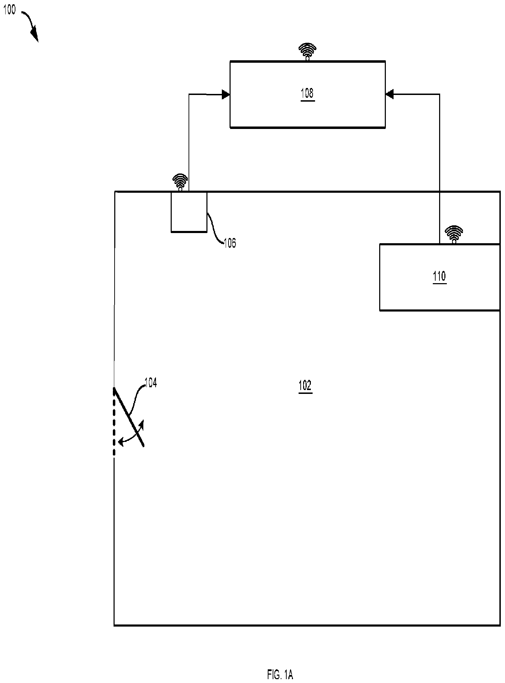

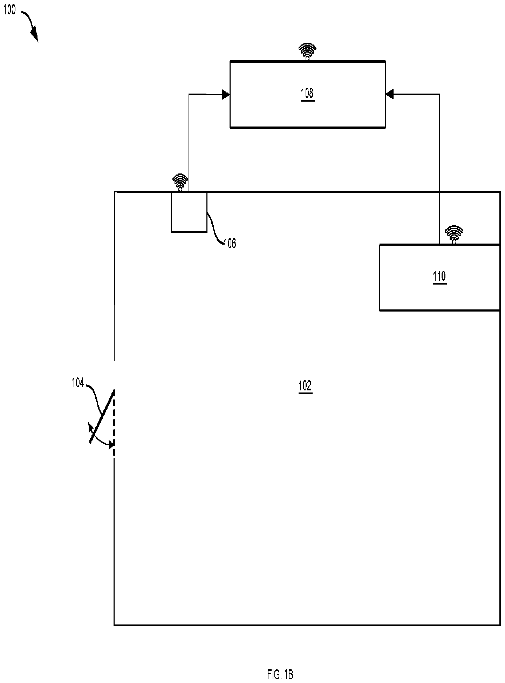

Referring to FIGs. 1A to 1C, a system 100 for detecting movement or opening and closing of door(s) associated with an area of interest (AOI) (also referred to as environment, herein) is disclosed. The AOI 102 may be a room associated with a building. The AOI 102 may also be a room associated with warehouses, ships, airplanes, and similar spaces but is not limited to the like. The AOI qow may include one or more doors 104 (collectively referred to as door 104, herein). In one or more embodiments, as shown in FIG. 1A, the door 104 may be movably coupled to a wall of the AOI 102 and operable to move between a closed position and an open position where the corresponding door 104 is within the AOI 102. However, in other embodiments, as shown in FIG. 1B, the door 104 may be movably coupled to the wall of the AOI 102 such that the door 104 may move between a closed position and an open position where the corresponding door 104 is outside the AOI 102. The door 104 in the open position may allow movement of occupants within and out of the AOI 102 and the door 104 in the closed position may restrict movement within and out of the AOI 102. The movement of the door 104 between the open and closed position may cause a change in air pressure within the AOI 102.

In one or more embodiments, the system 100 may include a pressure sensor 106 positioned at a predefined position within the AOI 102. The pressure sensor 106 may be operable to monitor air pressure within the AOI 102. In one or more embodiments, the pressure sensor 106 may be installed or positioned on a thermostat 110 associated with the AOI 102, however, the pressure sensor 106 may also be a standalone sensor 106 installed on the wall, ceiling, or pillar of the AOI 102.

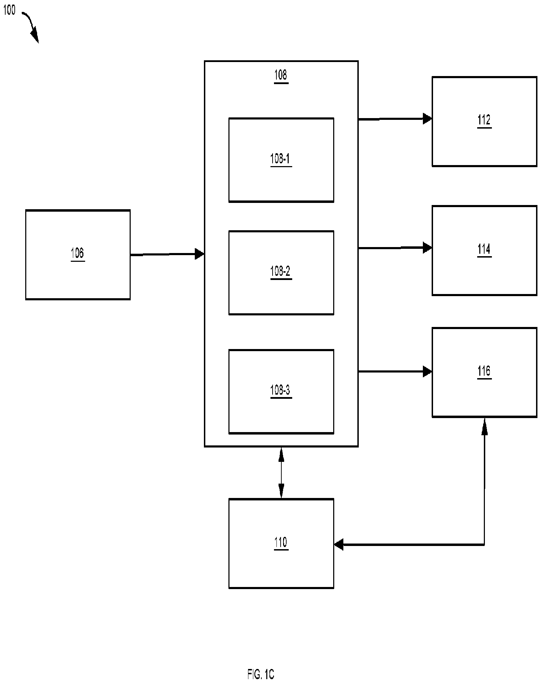

The system 100 may further include a processing device 108 in communication with the pressure sensor 106. Referring to FIG. 1C, the processing device 108 may comprise one or more processors 108-1 coupled to a memory 108-2 storing instructions executable by the one or more processors 108-1, which may enable the processing device 108 to perform one or more designated operations. In one or more embodiments, the processing device 108 may be a thermostat 110 associated with the AOI 102, however, in some embodiments, the processing device 108 may be in communication with the thermostat 110 associated with the AOI 102.

In one or more embodiments, the processing device 108 may be configured to monitor, using the pressure sensor 106, the air pressure within the AOI 102 in real-time. The processing device 108 may accordingly detect and measure a change in the air pressure within the AOI 102 based on the monitored air pressure. The change in the air pressure may be indicative of the opening or closing of the doors 104 of the AOI 102. Thus, the processing device 108 may be configured to detect the opening or closing of the doors 104 associated with the AOI 102 based on the measured change in the air pressure within the AOI 102.

Referring to FIG. 1A, in one or more embodiments, when the doors 104 of the AOI 102 are movably coupled to the wall of the AOI 102 such that the corresponding door 104 moves within the AOI 102 in the open position, the processing device 108 may detect movement of the corresponding door 104 from the open position to the closed position when the air pressure within the AOI 102 is detected or measured to be decreased. Further, the processing device 108 may be configured to detect the movement of the corresponding door 104 from the closed position to the open position when the air pressure within the AOI 102 is detected or measured to be increased.

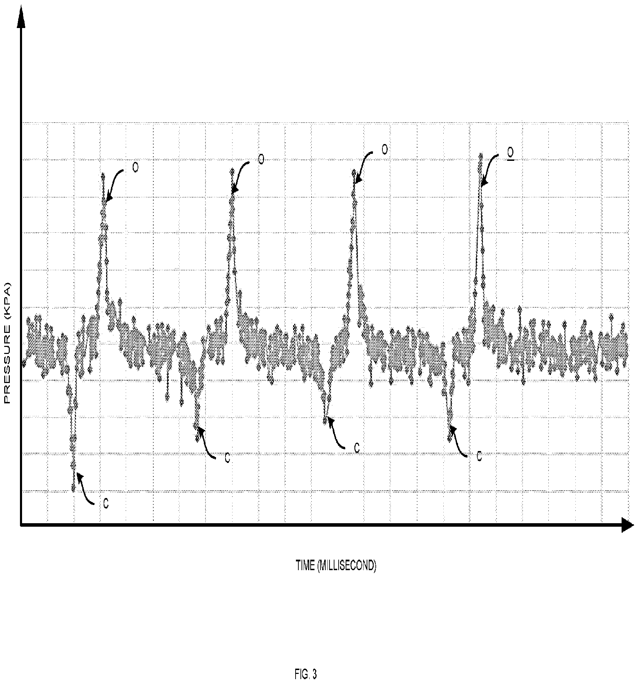

Referring to FIG. 3, an exemplary air pressure vs time plot monitored by the system 100 when implemented in AOI 102 of FIG. 1A for a given time duration is illustrated. The plot depicts the change in the air pressure within the AOI 102 while opening and closing the door 104 during the given time duration. As illustrated, the increase in the air pressure at different instances is shown as point 'C' in FIG. 3, which may be indicative of the closing of the door 104. Further, the decrease in the air pressure at different instances is shown as points 'O' in FIG. 3, which may be indicative of the opening of the door 104. In an example, but not limited to the like, the increase or decrease in the air pressure may be in kilo Pascal (kPa) within a few milliseconds, however, this may vary based on volume and dimension of the AOI 102. The processing device 108 may be accordingly calibrated to detect the opening or closing of the door 104.

Referring to FIG. 1B, in one or more embodiments, when the doors 104 of the AOI 102 are movably coupled to the wall of the AOI 102 such that the corresponding door 104 moves outside the AOI 102 in the open position, the processing device 108 may detect movement of the corresponding door 104 from the open position to the closed position when the air pressure within the AOI 102 is detected or measured to be increased. Further, the processing device 108 may be configured to detect movement of the corresponding door 104 from the closed position to the open position when the air pressure within the AOI 102 is detected or measured to be decreased.

In one or more embodiments, the processing device 108 may be configured with a machine learning unit 108-3 (machine earning model) as shown in FIG. 1C, which may be configured to receive training data for training the processing device 108 to detect the movement of the door associated with any new location. The training data may comprise values of air pressure within one or more known AOI having predefined known areas when the corresponding doors are at a closed position and an open position. The training data may further include a rate of change in the air pressure (Kilo Pascal per millisecond) within the one or more known AOI upon moving the corresponding doors between the closed position and the open position. The machine learning unit may be further configured to train the processing device 108, using the received training data, to detect and measure the change in air pressure within one or more new AOI when the corresponding doors of the new AOI move between the closed position and the open position. This may enable the system 100 to detect the movement or opening and closing of doors associated with various AOI having different volumes and dimensions, based on the historical (training data).

Further, the real-time data collected by the system 100 in real-time may be stored in a database associated with the system 100. The training data may be supplemented or updated with collected real-time data for detecting door movement in new AOI. In one or more embodiments, the processing device 108 may be configured to determine the time of opening or closing the door 104 of the AOI 102, which may also be stored in the database.

In one or more embodiments, the machine learning unit 108-3 may include but is not limited to decision trees, support vector machines, regression analysis, Bayesian networks, random forest learning, dimensionality reduction algorithms, boosting algorithms, artificial neural networks (e.g., fully connected neural networks, deep convolutional neural networks, or recurrent neural networks), deep learning, and/or other machine learning models. For example, in one or more embodiments, the machine learning unit 108-3 may use unsupervised learning algorithms to train the processing device 108 using the training or historical data. For example, in one or more embodiments, unsupervised learning algorithms may be configured to use input data that is not labeled, classified, or categorized. The unsupervised learning algorithms may be configured to identify similarities in the input data and to group new data based on the presence or absence of the identified similarities. Using unsupervised learning algorithms may be beneficial because it may allow for discovering hidden trends and patterns or extracting data features from the input data that would have been difficult to obtain if other techniques were used.

In one or more embodiments, when the system 100 is installed in a new AOI 102, the processing device 108 may be configured to request one or more users, admins, and/or occupants of the AOI 102 to manually move the corresponding doors 104 of the new AOI 102 between the closed position and the open position at a predefined interval. The processing device 108 may be in communication with mobile devices 112 associated with the users or occupants. The request or instruction for opening and closing the door 104 may be transmitted to the mobile devices 112 of the users or occupants. and/or to the thermostat 110 installed in the AOI 102.

The processing device 108 may be further configured to collect data comprising values of air pressure within the new AOI 102 when the corresponding doors 104 are at the closed position and the open position, and a rate of change in the air pressure within the new AOI 102 upon moving the corresponding doors 104 between the closed position and the open position. Accordingly, the processing device 108 may be calibrated, using the collected data, to detect the opening or closing of the doors 104 associated with the new AOI 102.

In one or more embodiments, the processing device 108 may be configured to detect the movement of occupants into and out of the AOI 102 based on the detected movement of the doors 104 between the closed position and the open position. The processing device 108 may accordingly further count the number of occupants present within the AOI 102 in real-time.

Referring to FIG. 1C, in one or more embodiments, the thermostat 110 and/or the processing device 108 may be in communication with a heating, ventilation, and air conditioning (HVAC) system 116 installed at the AOI 102. The occupancy data collected by the processing device 108 may be transmitted to the thermostat 110 to facilitate in controlling the environmental attributes (temperature, humidity, and indoor air quality) within the AOI using the HVAC system 116. Further, in one or more embodiments, the processing device 108 may be in communication with an alarm system or security system 114 associated with the AOI 102. The door movement (opening or closing) data and the occupancy data collected by the processing device 108 may be transmitted to the alarm system/security system 114 to facilitate in detection of un-authorized movement or intrusion within the AOI and further generating and transmitting an alert signal over the mobile devices 112 associated with the users, admins, and occupants of the AOI 102.

The processing device 108, the pressure sensor 106, the mobile devices 112, and/or the thermostat 110 may include a transceiver or a communication module to communicatively connect the processing device 108 to one or more of the pressure sensor 106, the mobile devices 112, and/or the thermostat 110, through a network via wired and/or wireless media. In one or more embodiments, the system 100 or processing device 108, and mobile devices 112 associated with the occupants of the AOI 102 or registered users or the admin may be operatively coupled to a website and so be operable from any Internet-enabled user device. The mobile devices 112 may allow the occupants, the users, and the admin to monitor and control the operation of the system 100, especially during the calibration process. Examples of mobile devices 112 may include but are not limited to, a portable computer, a personal digital assistant, a handheld device, and a workstation.

In one or more embodiments, the network can be a wireless network, a wired network or a combination thereof. Network can be implemented as one of the different types of networks, such as intranet, local area network (LAN), wide area network (WAN), the internet, and the like. Further, the network may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further, network can include a variety of network devices, including transceivers, routers, bridges, servers, computing devices, storage devices, and the like. In another implementation the network can be a cellular network or mobile communication network based on various technologies, including but not limited to, Global System 100 for Mobile (GSM), General Packet Radio Service (GPRS), Code Division Multiple Access (CDMA), Long Term Evolution (LTE), WiMAX, 5G or 6G network protocols, and the like.

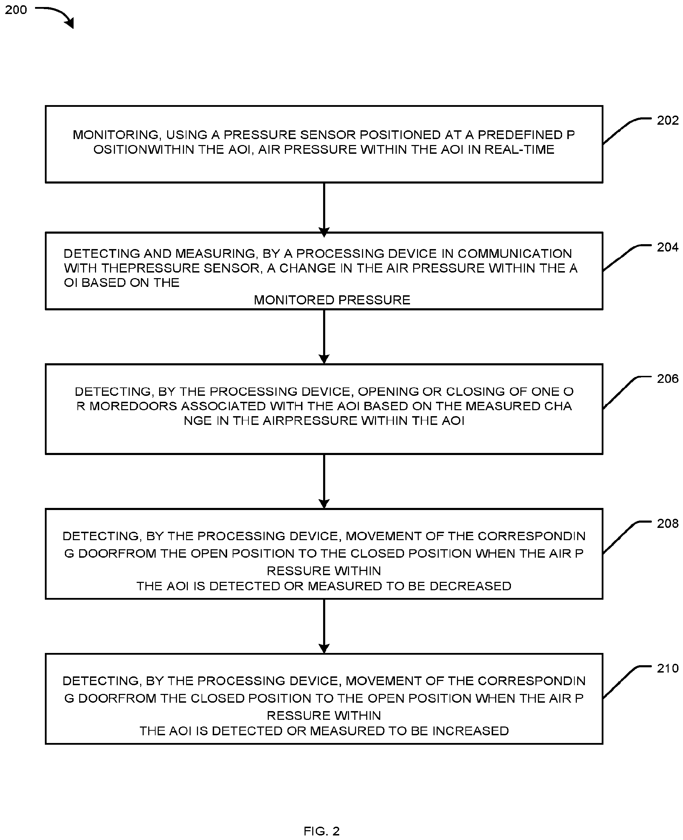

Referring to FIG. 2, method 200 for detecting the movement of doors associated with an area of interest (AOI) is disclosed, which may further detect and count the occupants within the AOI. Method 200 may involve the pressure sensor 106, the processing device 108, and other components associated with the system 100 of FIGs. 1A to 1C. Method 200 may include step 202 of monitoring, using the pressure sensor, air pressure within the AOI in real-time. Further, method 200 may include step 204 of detecting and measuring, by the processing device, a change in the air pressure within the AOI based on the pressure monitored at step 202. Accordingly, method 200 may include step 206 of detecting, by the processing device, opening or closing of one or more doors associated with the AOI based on the measured change in the air pressure within the AOI.

In one or more embodiments, the processing device may be a thermostat associated with the AOI. Further, the pressure sensor may be configured on the thermostat or walls associated with the AOI. However, in one or more embodiments, the processing device may be in communication with the thermostat associated with the AOI.

In one or more embodiments, when the doors of the AOI are movably coupled to the wall of the AOI such that the corresponding door moves within the AOI in the open position as shown in FIG. 1A, method 200 may include step 208 of detecting, by the processing device, the movement of the corresponding door from the open position to the closed position when the air pressure within the AOI is detected or measured to be decreased. Further, method 200 may include step 210 of detecting, by the processing device, the movement of the corresponding door from the closed position to the open position when the air pressure within the AOI is detected or measured to be increased.

In one or more embodiments, when the doors of the AOI are movably coupled to the wall of the AOI such that the corresponding door moves outside of the AOI in the open position as shown in FIG. 1B, method 200 may include the step of detecting, by the processing device, the movement of the corresponding door from the open position to the closed position when the air pressure within the AOI is detected or measured to be increased. Further, method 200 may include the step of detecting, by the processing device, the movement of the corresponding door from the closed position to the open position when the air pressure within the AOI is detected or measured to be decreased.

In one or more embodiments, method 200 may further include the steps of detecting the movement of one or more occupants into and out of the AOI based on the detected movement of the doors between the closed position and the open position, and correspondingly counting a number of the occupants present within the AOI in real-time.

In one or more embodiments, method 200 may include the steps of receiving, by a machine learning unit configured with the processing device, training data comprising values of air pressure within one or more known AOIs having predefined known areas when the corresponding doors are at a closed position and an open position, and a rate of change in the air pressure within the one or more known AOIs upon moving the corresponding doors between the closed position and the open position. Further, method 200 may include the steps of training, the processing device, using the received training data, to measure the change in air pressure within one or more new AOIs upon moving the corresponding doors between the closed position and the open position.

In one or more embodiments, when the system is installed in a new AOI, method 200 may include the step of requesting, by the processing device, one or more users or admins or occupants of the AOI to manually move the corresponding doors of the new AOI between the closed position and the open position at a predefined interval. The processing device may be in communication with mobile devices associated with the users or occupants. The request or instruction for opening and closing the door may be transmitted to the mobile devices of the users or occupants. and/or to the thermostat installed in the AOI.

Method 200 may further include the steps of collecting, by the processing device, data comprising values of air pressure within the new AOI when the corresponding doors are at the closed position and the open position, and a rate of change in the air pressure within the new AOI upon moving the corresponding doors between the closed position and the open position. Accordingly, method 200 may include the step of calibrating the processing device, using the collected data, to detect the opening or closing of the doors associated with the new AOI.

Thus, this invention provides a simple, automated, efficient, and cost-effective system and method for monitoring the movement (opening or closing) of doors of an area of interest (AOI) for occupancy detection within the AOI

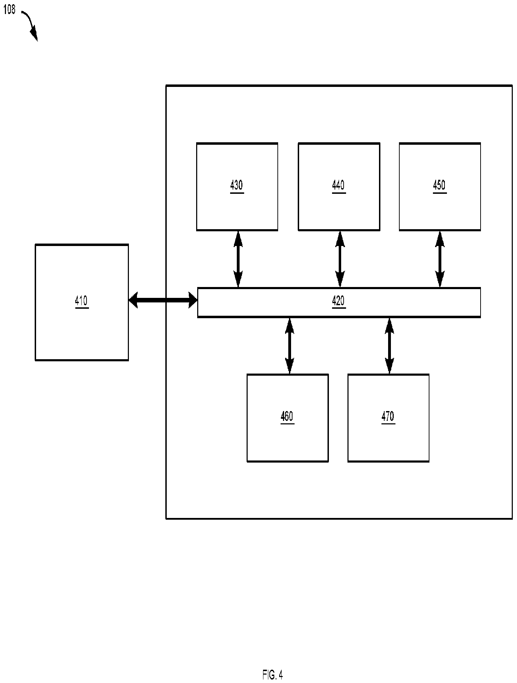

FIG. 4 is an exemplary schematic block diagram of a hardware system used for implementing the processing device. As shown in FIG. 4, the processing device can include an external storage device 410, a bus 420, a main memory 430, a read only memory 440, a mass storage device 450, communication port 460, and a processor 470. A person skilled in the art will appreciate that the processing device may include more than one processor and communication ports. Examples of processor 470 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 470 may include various modules. Communication port 460 can be any of an RS-232 port for use with a modem-based dialup connection, a 10/100 Ethernet port, a Gigabit or 10 Gigabit port using copper or fibre, a serial port, a parallel port, or other existing or future ports. Communication port 460 may be chosen depending on a network, such a Local Area Network (LAN), Wide Area Network (WAN), or any network to which processing device connects. Memory 430 can be Random Access Memory (RAM), or any other dynamic storage device commonly known in the art. Read-only memory 440 can be any static storage device(s) e.g., but not limited to, a Programmable Read Only Memory (PROM) chips for storing static information e.g., start-up or BIOS instructions for processor 470. Mass storage 450 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 420 communicatively couples processor(s) 470 with the other memory, storage, and communication blocks. Bus 420 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 470 to software system.

Optionally, operator and administrative interfaces, e.g., a display, keyboard, and a cursor control device, may also be coupled to bus 420 to support direct operator interaction with processing device. Other operator and administrative interfaces can be provided through network connections connected through communication port 460. The external storage device 410 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary processing device limit the scope of the invention.

While the invention has been described with reference to exemplary embodiments, it will be understood by those skilled in the art that various changes may be made without departing from the scope of the invention as set out in the appended claims. Modifications may be made to adopt a particular situation or material to the teachings of the disclosure without departing from the scope of the invention. Therefore, it is intended that the invention not be limited to the particular embodiment disclosed, but that the invention includes all embodiments falling within the scope of the invention as set out in the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A system (100) to detect movement of doors (104) associated with an area of interest AOI (102), the system comprising:
a pressure sensor (106) positioned at a predefined position within the AOI, wherein the pressure sensor is operable to monitor air pressure within the AOI; and
a processing device (108) in communication with the pressure sensor, the processing device comprises one or more processors (108-1) coupled to a memory (108-2) storing instructions executable by the processors, and configured to:
monitor, using the pressure sensor, the air pressure within the AOI in real-time;
detect and measure a change in the air pressure within the AOI based on the monitored air pressure; and
detect opening or closing of one or more doors (104) associated with the AOI based on the measured change in the air pressure within the AOI.

2. The system (100) of claim 1, wherein the processing device (108) is a thermostat (110) associated with the AOI (102), and wherein the pressure sensor (106) is configured on the thermostat or walls associated with the AOI.

3. The system (100) of claim 1, wherein the processing device (108) is in communication with a thermostat (110) associated with the AOI (102), and wherein the pressure sensor (106) is configured on the thermostat or walls associated with the AOI.

4. The system (100) of any preceding claim, wherein the one or more doors (104) are movably coupled to a wall of the AOI (102) and configured to move between a closed position and an open position where the corresponding door is within the AOI,
optionally wherein the processing device (108) is configured to:
detect movement of the corresponding door from the open position to the closed position when the air pressure within the AOI is detected or measured to be decreased; and
detect movement of the corresponding door from the closed position to the open position when the air pressure within the AOI is detected or measured to be increased.

5. The system (100) of any of claims 1 to 3, wherein the one or more doors (104) are movably coupled to a wall of the AOI (102) and configured to move between a closed position and an open position where the corresponding door is outside the AOI,
optionally wherein the processing device (108) is configured to:
detect movement of the corresponding door from the open position to the closed position when the air pressure within the AOI is detected or measured to be increased; and
detect movement of the corresponding door from the closed position to the open position when the air pressure within the AOI is detected or measured to be decreased.

6. The system (100) of any preceding claim, wherein the processing device (108) is configured to detect movement of one or more occupants into and out of the AOI (102) based on the detected movement of the one or more doors (104) between the closed position and the open position, and correspondingly count a number of the one or more occupants present within the AOI in real-time.

7. The system (100) of any preceding claim, wherein the processing device (108) is configured with a machine learning unit (108-3) that is configured to:
receive training data comprising values of air pressure within one or more known AOIs having predefined known area when the corresponding doors are at a closed position and an open position, and a rate of change in the air pressure within the one or more known AOIs upon moving the corresponding doors between the closed position and the open position; and
train the processing device, using the received training data, to measure the change in air pressure within one or more new AOIs upon moving the corresponding doors between the closed position and the open position.

8. The system (100) of any preceding claim, wherein when the system is installed in a new AOI, the processing device (108) is configured to:
request one or more users or occupants of the AOI (102) to manually move the corresponding doors (104) of the new AOI between the closed position and the open position at a predefined interval;
collect data comprising values of air pressure within the new AOI when the corresponding doors are at the closed position and the open position, and a rate of change in the air pressure within the new AOI upon moving the corresponding doors between the closed position and the open position; and
calibrate the processing device, using the collected data, to detect opening or closing of the one or more doors associated with the new AOI.

9. A method (200) for detecting movement of doors (104) associated with an area of interest AOI (102), the method comprising the steps of:
monitoring, using a pressure sensor (106) positioned at a predefined position within the AOI, air pressure within the AOI in real-time;
detecting and measuring, by a processing device (108) in communication with the pressure sensor, a change in the air pressure within the AOI based on the monitored pressure; and
detecting, by the processing device, opening or closing of one or more doors associated with the AOI based on the measured change in the air pressure within the AOI.

10. The method (200) of claim 9, wherein the processing device (108) is a thermostat (110) associated with the AOI (102), and wherein the pressure sensor (106) is configured on the thermostat or walls associated with the AOI; or
wherein the processing device is in communication with a thermostat associated with the AOI, and wherein the pressure sensor is configured on the thermostat or walls associated with the AOI.

11. The method (200) of any of claims 9 and 10, wherein the one or more doors (104) are movably coupled to a wall of the AOI (102) and configured to move between a closed position and an open position where the corresponding door is within the AOI,
optionally wherein the method comprises the steps of:
detecting, by the processing device (108), movement of the corresponding door from the open position to the closed position when the air pressure within the AOI is detected or measured to be decreased, and
detecting, by the processing device, movement of the corresponding door from the closed position to the open position when the air pressure within the AOI is detected or measured to be increased.

12. The method (200) of any of claims 9 and 10, wherein the one or more doors (104) are movably coupled to a wall of the AOI (102) and configured to move between a closed position and an open position where the corresponding door is outside the AOI;
optionally wherein the method comprises the steps of:
detecting, by the processing device (108), movement of the corresponding door from the open position to the closed position when the air pressure within the AOI is detected or measured to be increased, and
detecting, by the processing device, movement of the corresponding door from the closed position to the open position when the air pressure within the AOI is detected or measured to be decreased.

13. The method (200) of any of claims 9 to 12, wherein the method further comprises the steps of detecting, by the processing device (108), movement of one or more occupants into and out of the AOI (102) based on the detected movement of the one or more doors (104) between the closed position and the open position, and correspondingly counting a number of the one or more occupants present within the AOI in real-time.

14. The method (200) of any of claims 9 to 13, wherein the method comprises the steps of:
receiving, by a machine learning unit (108-3) configured with the processing device (108), training data comprising values of air pressure within one or more known AOIs having predefined known areas when the corresponding doors are at a closed position and an open position, and a rate of change in the air pressure within the one or more known AOIs upon moving the corresponding doors between the closed position and the open position; and
training, the processing device, using the received training data, to measure the change in air pressure within one or more new AOIs upon moving the corresponding doors between the closed position and the open position.

15. The method (200) of any of claims 9 to 14, wherein when the pressure sensor (106) and processing device (108) are installed in a new AOI, the method comprises the steps of:
requesting, by the processing device, one or more users or occupants of the AOI to manually move the corresponding doors of the new AOI between the closed position and the open position at a predefined interval;
collecting, by the processing device, data comprising values of air pressure within the new AOI when the corresponding doors are at the closed position and the open position, and a rate of change in the air pressure within the new AOI upon moving the corresponding doors between the closed position and the open position; and
calibrating, the processing device, using the collected data, to detect opening or closing of the one or more doors associated with the new AOI.
